# EUROPEAN PATENT APPLICATION

(11) **EP 1 443 711 A1**
(43) Date of publication of application: **04.08.2004**
(21) Application number: 04250346.6
(22) Date of filing: 22.01.2004
(51) Int. Cl.: H04L 12/28

(54) **Printer acces control**

(30) Priority: 22.01.2003 KR 2003004254
(71) Applicant: Samsung Electronics Co., Ltd., Suwon-si, Gyeonggi-do 442-742 (KR)
(72) Inventor: Lee, Hyuck-jae, Gangnam-gu Seoul (KR)
(74) Representative: Geary, Stuart Lloyd

(57) **Abstract**

A client management method and a wireless LAN printer in a wireless network are provided. According to the client management method for a wireless Local Area Network (LAN), information is extracted from Media Access Control (MAC) frames of clients associated with the Basic Service Set (BSS) of which the LAN printer is a member. A list of the clients is formed, using MAC addresses of the MAC frames as an index, and the management of the printing operations of the clients is based on the list.

## Description

The present invention relates to a method of controlling access to printing resources in a wireless local area network.

Currently, printing operations are generally performed using a wired LAN. A client/server printer driver system that utilizes such a wired LAN is disclosed in US-A-6003069.

It is difficult to make changes to and extend wired LANs due to the characteristics of wired networks. Moreover, wired LANs are not able to support mobile communication systems.

Consequently, wired LANs are increasingly being replaced with wireless RF or infrared LANs. Wireless LANs have the advantages of easy installation and rapid network deployment.

The Institute of Electrical and Electronics Engineers (IEEE) established the IEEE 802.11 wireless standard, which defines an air interface for communication between wireless clients and base stations or access points, or between peer devices. The IEEE 802.11b standard, established in September 1999, provides a maximum speed of 11 Mbps in the 2.4 GHz band.

The IEEE 802.11b standard has been applied in the development of wireless LAN printers. When a computer wants to connect to an IEEE 802.11 b wireless LAN printer and perform a printing operation according to the IEEE 802.11 b standard the computer must first associate with the Basic Service Set (BSS) of which the LAN printer is a member. Various processes including scanning, synchronisation, association, disassociation, authentication, de-authentication and transfer are performed between the members of the BSS by the exchange of upper protocol packets.

The wireless LAN printer functions as a network server. If the wireless LAN printer is included in the BSS, clients that wish to associate with the BSS perform synchronization, association, and authentication processes in relation to the wireless LAN printer. However, the number of clients allowed to associate with the wireless LAN printer is limited. Association with the wireless LAN printer is restricted to approximately ten clients at a time.

Moreover, clients that have not been authenticated to receive services from the wireless LAN printer are also able to associate with the wireless LAN printer. Consequently, there may be clients that have been authenticated to receive services of the wireless LAN printer that are unable to associate with the wireless LAN printer or perform printing operations due to the presence of non-authenticated clients.

A method, according to the present invention, is characterised by building a list of records, each comprising the MAC address of a network node and printing resource access control data, and permitting or refusing access to said printing resource by a network node in dependence on the corresponding record in said list.

Further preferred and optional features are set forth in claims 1 to 47 appended hereto.

Embodiment will now be described, by way of example, with reference to the accompanying drawings, in which:
Figure 1 illustrates a wireless local area network (LAN) group that includes a wireless LAN printer;
Figure 2 is a block diagram illustrating a wireless LAN group that includes a wireless LAN printer according to the present invention; and
Figure 3 is a flow chart illustrating a client management method according to the present invention.

In describing different aspects of the present invention, the detailed descriptions of a conventional technique will be omitted when it is determined that the detailed descriptions deviate from the present invention. In addition, the terms used in the description are defined to be consistent with the functions of elements in the present invention.

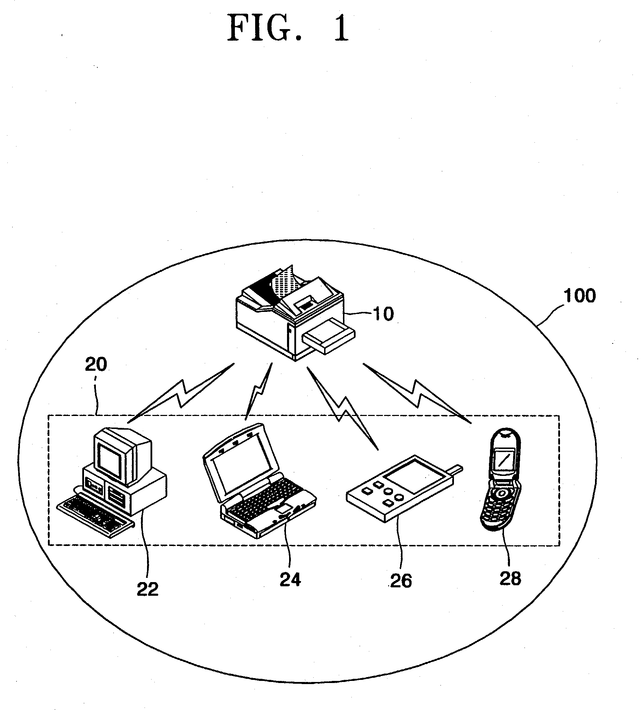

Referring to Figure 1, a wireless LAN printer 10 and clients 20 communicate in a wireless LAN according to the IEEE 802.11b standard. In Figure 1, the wireless LAN printer 10 functions as a network server. The clients 20 include a personal computer (PC) 22, a laptop computer 24, a personal digital assistant (PDA) 26 and a mobile phone 28. The clients depicted in Figure 1 are only illustrative of the various clients that may be comprised in a wireless LAN and a given wireless LAN may include more or less clients. The clients 20 perform printing operations using the wireless LAN printer 10.

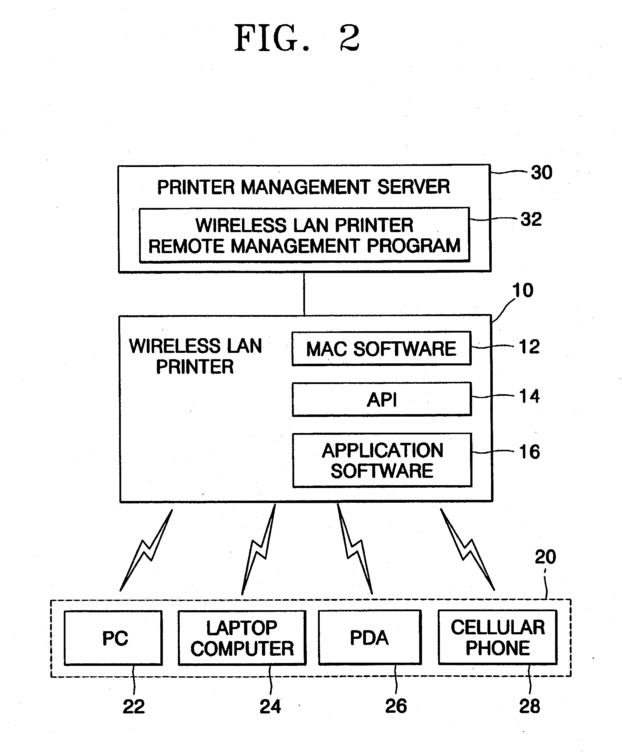

As shown in Figure 2, the wireless LAN printer 10, according to one aspect of the present invention includes: media access control (MAC) software 12, an application programming interface (API) 14 and application software 16. The MAC software 12 is used to extract information from the MAC frames of the clients 20. The API 14 forms a list of clients 20, using the MAC address associated with the MAC frame of each client as an index. The list of clients is used to manage the printing operations of the clients 20. The application software 16 is used to perform the printing operations.

The wireless LAN printer 10 maintains a wired or wireless connection to a printer management server 30. The printer management server 30 includes a wireless LAN printer remote management program 32.

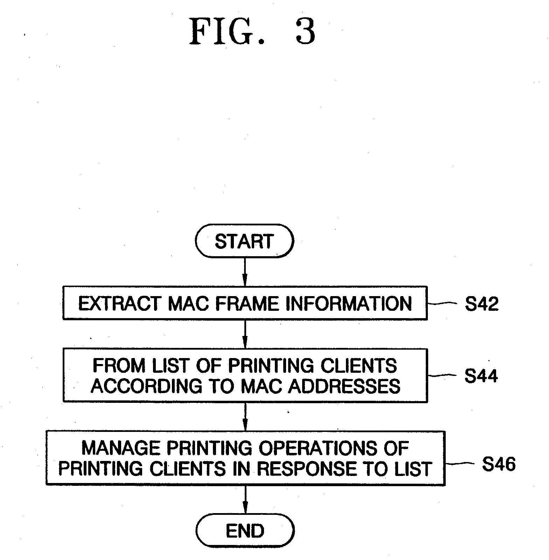

Referring to Figure 3, information from the MAC frames of the client 20 is extracted in step S42 via the wireless LAN printer 10, which functions as a network server that manages multiple clients 20 in a wireless LAN. In step S44, a list of the clients 20 is formed using the MAC address of each client as an index. Thereafter, in operation S46, the printing operations of the clients 20 are managed in response to the list.

In order to allow the clients 20 to use the wireless LAN printer 10 in a wireless LAN, the wireless LAN printer 10 and the clients 20 need to be associated with the same BSS 100. A BSS 100 is as a wireless LAN group or a link level group and defines a limited space where wireless service can be provided. In other words, the BSS 100 is a basic network structure in the wireless LAN, or a cell, and it consists of one access point (AP) and at least one terminal.

While included in the BSS 100, the clients 20 can exchange upper protocol packets in order to perform various processes including scanning, synchronization, association, authentication, transfer, de-authentication, and disassociation.

The wireless LAN printer 10, according to an aspect of the present invention, functions as a network server. In other words, the wireless LAN printer 10 becomes a BSS master or a link group server. The BSS master is a group owner that generates beacons. When the wireless LAN printer 10 is the master of the BSS 100, clients 20 that wish to associate with the BSS 100 perform processes such as, synchronization, association, and authentication with respect to the wireless LAN printer 10. However, association with the wireless LAN printer 10 is limited to approximately ten clients 20 at a time. Thus, it is preferable that only authenticated clients 20 be allowed to associate with the BSS 100.

In order to select which clients that are allowed to associate with the LAN printer, information is extracted from the MAC frames of the clients 20 and a list of the clients 20 is formed using the MAC address of each of the clients, extracted from the MAC frames, as an index. The printing operations of the clients 20 can subsequently be managed using the list. Since each of the clients have a LAN card and each LAN card has a unique MAC address, the clients 20 are distinguished by their respective MAC address.

The hierarchy of the MAC frames is present in the sublayer of the data link layer, which is the second layer of the seven layers of the Open Systems Interconnection (OSI) basic reference model. The MAC frames define the transmitting/receiving method of the frames, the format of the frames, and error detection of data. According to the IEEE 802.11 b standard, the MAC frames are referred to as link level frames. The link level frames include three frames: management frames, control frames, and data frames.

The list is restructured in real time according to each of the beacon signals, and the list is updated when the states of the clients 20 change. In addition, the list reflects the states of the clients 20 in relation to the wireless LAN printer 10 and includes fields regarding synchronization, association, and authentication.

Furthermore, the list of clients includes fields specifying whether each client 20 is allowed to associate with the wireless LAN printer 10. The wireless LAN printer remote management program 32 in the printer management server 30 updates the fields specifying association permission. In other words, the wireless LAN printer remote management program 32 enables the fields denoting association permission in relation to authenticated clients, and disables the fields in relation to non-authenticated clients. Allowance of the association of the clients 20 with respect to the wireless LAN printer 10 is indicated in the fields denoting association permission. In the conventional system, when too many non-authenticated clients associate with the wireless LAN printer 10, it may be impossible for the authenticated clients to associate with the wireless LAN printer 10. According to the present invention, since the fields denoting association permission are included in the system and the system prevents non-authenticated clients from associating with the wireless LAN printer 10, additional, authenticated clients are able to receive services from the wireless LAN printer 10.

In addition, the list of clients may include fields denoting the printing priority of the clients 20. Thus, clients with a higher printing priority are granted access to the printing service before clients with a lower printing priority.

Furthermore, the list includes fields specifying whether various functions of the wireless LAN printer 10 are accessible to each of the clients 20. For example, when the wireless LAN printer 10 is a high-end printer that includes various functions, such as colour printing, photo printing, and mono printing, the list of clients include fields specifying whether a particular function is accessible to the client 20. Thus, each field is enabled or disabled according to the functions desired by a user, and the requests to change the fields are based on requests for functions desired by the user.

The list of clients is managed in real time and reflects the state of the wireless LAN printer 10. In the case where a plurality of wireless LAN printers of the same kind are present, the wireless LAN printer remote management program 32 monitors the number of clients and the traffic of the clients in each group, in relation to each of the wireless LAN printers 10. The wireless LAN printer remote management program 32 can rearrange associations so that a wireless LAN printer 10 having less traffic is associated with additional clients.

It is possible to construct a business model for a printing service provider by using a client management method and a wireless LAN printer according to an aspect of the present invention. For example, a printer manager can form a BSS that includes LAN printers installed in airports, subway stations, Internet cafeterias, and department stores. Users who desire access to the printers are assigned an authentication key. During this process, the printer manager or a manager program extracts the MAC address of the client, and the MAC address is provided to the wireless LAN printer to initiate a connection timer that corresponds to the client. The MAC address is also used to manage the link level of the printer, to request charges to the client, to forcibly stop a printing operation, and to prevent appropriation of a wired equivalent privacy (WEP) key used in a security protocol.

In addition, a log record describing usage of the printer can be stored using the MAC hierarchy. The record can be stored in a storage device of the printer or a storage device of the printer management server. Since the MAC addresses are unique, the printer manager can also collect user information by recording a user's device information, and storing marketing information such as the frequency of use associated with a particular printer.

As described above, by preventing association of non-authenticated clients with the wireless LAN printer, additional authenticated clients are given the opportunity to associate with the wireless LAN printer.

Furthermore, the print manager can provide distinct services by assigning a printing priority to the clients and request charges according to the functions of the wireless LAN printer used by the clients.

## Claims

1. A printing client management method of a wireless Local Area Network printer that functions as a network server and manages at least one printing client in a Local Area Network, comprising:
extracting information from Media Access Control frame of the at least one client that is associated with a Basic Service Set, which includes the wireless LAN printer;
forming a list of the at least one printing client by using Media Access Control address of the Media Access Control frame as an index; and
managing printing operations of the at least one printing client according to the list.

2. The method according to claim 1, wherein the wireless Local Area Network printer and the at least one printing client operate within the IEEE 802:11b standard.

3. The method according to claim 1, wherein the list of the at least one printing client is restructured in real time according to a beacon signal, and the list is updated when a state of the at least one printing client changes.

4. The method according to claim 1, wherein the list of the at least one printing client denotes state of the at least one printing client in relation to the wireless Local Area Network printer and includes fields for at least one of synchronization, association, and authentication.

5. The method according to claim 1, wherein the list of the at least one printing client includes fields specifying whether each printing client is allowed to associate with the wireless Local Area Network printer.

6. The method according to claim 1, wherein the list of the at least one printing client includes fields assigning a printing priority to the at least one printing client.

7. The method according to claim 1, wherein the list of the at least one printing client includes fields denoting whether specific functions of the wireless Local Area Network printer are usable by the at least one printing client.

8. The method according to claim 1, wherein the at least one printing client is a personal computer, a personal digital assistant, or a cellular phone, that includes a wireless Local Area Network functionality.

9. A wireless Local Area Network printer that functions as a network server and manages at least one printing client in a Local Area Network, comprising:
an extraction unit to extract information from Media Access Control frame of the at least one printing client that is associated with a Basic Service Set, which includes the wireless LAN printer;
a list forming unit to form a list of the at least one printing client using Media Access Control address of the Media Access Control frame as an index; and
a management unit to manage printing operations of the at least one printing client according to the list.

10. The wireless Local Area Network printer according to claim 9, wherein the wireless Local Area Network printer and the at least one printing client operate within the IEEE 802.11b standard.

11. The wireless Local Area Network printer according to claim 9, wherein the list of the at least one printing client is restructured in real time according to a beacon signal, and the list is updated when a state of the at least one printing client changes.

12. The wireless Local Area Network printer according to claim 9, wherein the list denotes a state of the at least one printing client in relation to the wireless Local Area Network printer and includes fields for at least one of synchronization, association, and authentication.

13. The wireless Local Area Network printer according to claim 9, wherein the list of the at least one printing client includes fields specifying whether each printing client is allowed to associate with the wireless Local Area Network printer.

14. The wireless Local Area Network printer according to claim 9, wherein the list of the at least one printing client includes fields assigning a printing priority to the at least one printing client.

15. The wireless Local Area Network printer according to claim 9, wherein the list of the at least one printing client includes fields denoting whether specific functions of the wireless Local Area Network printer are usable by the at least one printing client.

16. The wireless Local Area Network printer according to claim 9, wherein the at least one printing client is a personal computer, a personal digital assistant, or a cellular phone, that includes a wireless Local Area Network functionality.

17. The wireless Local Area Network printer according to claim 9, wherein the extraction unit, the list forming unit, and the management unit are implemented in network cards of the wireless Local Area Network printer.

18. The wireless Local Area Network printer according to claim 9, wherein the extraction unit, the list forming unit, and the management unit are implemented as hardware or software.

19. The method of according to claim 2, wherein the list of the at least one printing client is restructured in real time according to a beacon signal, and the list is updated when a state of the at least one printing client changes.

20. The method of according to claim 2, wherein the list of the at least one printing client denotes a state of the at least one printing client in relation to the wireless Local Area Network printer and includes fields for at least one of synchronization, association, and authentication.

21. The method of according to claim 2, wherein the list of the at least one printing client includes fields specifying whether the at least one printing client is allowed to associate with the wireless LAN Local Area Network printer.

22. The method of according to claim 2, wherein the list of the at least one printing client includes fields assigning a printing priority to the at least one printing client.

23. The method of according to claim 2, wherein the list of the at least one printing client includes fields denoting whether specific functions of the wireless Local Area Network printer are usable by the at least one printing client.

24. The method of according to claim 2, wherein the at least one printing client is a personal computer, a personal digital assistant, or a cellular phone, that includes a wireless Local Area Network functionality.

25. The wireless LAN Local Area Network printer of according to claim 10, wherein the list of the at least one printing client is restructured in real time according to a beacon signal, and the list is updated when a state of the at least one printing client changes.

26. The wireless LAN Local Area Network printer of according to claim 10, wherein the list denotes a state of the at least one printing client with respect to the wireless LAN Local Area Network printer and includes fields for at least one of synchronization, association, and authentication.

27. The wireless LAN Local Area Network printer of according to claim 10, wherein the list of the at least one printing client includes fields specifying whether the at least one printing client is allowed to associate with the wireless Local Area Network printer.

28. The wireless LAN Local Area Network printer of according to claim 10, wherein the list of the at least one printing client includes fields assigning a printing priority to the at least one printing client.

29. The wireless LAN Local Area Network printer of according to claim 10, wherein the list of the at least one printing client includes fields denoting whether specific functions of the wireless Local Area Network printer are usable by the at least one printing client.

30. The wireless LAN Local Area Network printer of according to claim 10, wherein the at least one printing client is a personal computer, a personal digital assistant, or a cellular phone, that includes a wireless Local Area Network functionality.

31. The wireless Local Area Network printer according to claim 10, wherein the extraction unit, the list forming unit, and the management unit are implemented in network cards of the wireless Local Area Network printer.

32. The wireless Local Area Network printer according to claim 10, wherein the extraction unit, the list forming unit, and the management unit are implemented as hardware or software.

33. A printing client management method of a wireless Local Area Network printer, comprising:
forming a list that includes at least one printing client using Media Access Control address of the Media Access Control frame related to the at least one printing client as an index; and
associating the at least one printing client authenticated to receive services of the wireless Local Area Network printer to the wireless Local Area Network printer using the list of the at least one printing client.

34. The method according to claim 33, wherein allowance of association of the at least one printing client in relation to the wireless Local Area Network printer is determined based on fields denoting association permission.

35. The wireless Local Area Network printer according to claim 9, further comprising:
an association forming unit to associate each authenticated printing client with the wireless Local Area Network printer using the list of the at least one printing client.

36. The wireless Local Area Network printer according to claim 9, further comprising:
a media access control software is used to extract information from the Media Access Control frame of the at least one printing client; and
an application programming interface is used to form a list of the at least one printing client using Media Access Control address associated with the Media Access Control frame as an index.

37. The wireless Local Area Network printer according to claim 9, wherein the printer maintains a wired or wireless connection to a printer management server.

38. The wireless Local Area Network printer according to claim 36, wherein the printer management server includes a wireless Local Area Network printer remote management program.

39. A printing client management method of a wireless Local Area Network printer that functions as a network server and manages at least one printing client in a Local Area Network, comprising:
extracting information from Media Access Control frame of the at least one printing client;
forming a list of the at least printing client using Media Access Control address of the Media Access Control frame as an index; and
managing printing operation of the at least one printing client according to the list.

40. The method according to claim 38, wherein the wireless Local Area Network printer becomes a Basic Service Set master or a link group server.

41. The method according to claim 15, wherein each field denoting whether specific functions of the wireless Local Area Network printer is enabled or disabled according to functions desired by a user.

42. A computer readable medium having embodied thereon a computer program to perform a method, comprising:
extracting information from Media Access Control frame of at least one printing client that is associated with a Basic Service Set, which includes a wireless Local Area Network printer;
providing the Media Access Control information of the at least one printing client to the wireless Local Area Network printer to initiate a connection timer; and
managing the link level of the printer using the Media Access Control information of the at least one printing client.

43. The computer program according to claim 42, wherein the Media Access Control information of the at least one printing client is used to request changes to the at least one printing client.

44. The computer program according to claim 42, wherein the Media Access Control information of the at least one printing client is used to forcibly stop a printing operation.

45. The computer program according to claim 42, wherein the Media Access Control information of the at least one printing client is used to prevent appropriation of a Wired Equivalent Privacy key used in a security protocol.

46. The computer program according to claim 42, wherein a log record describing usage of the printer is stored using a Media Access Control hierarchy.

47. The computer program according to claim 42, wherein the Media Access Control information is used to collect user information by recording a user's device information.

48. A method of controlling access to printing resources in a wireless local area network, the method being **characterised by** building a list of records, each comprising the MAC address of a network node and printing resource access control data, and permitting or refusing access to said printing resource by a network node in dependence on the corresponding record in said list.
